# EUROPEAN PATENT SPECIFICATION

(11) **EP 0 299 084 B1**
(45) Date of publication and mention of the grant of the patent: **10.11.1993**
(21) Application number: 88901296.9
(22) Date of filing: 27.01.1988
(51) Int. Cl.: G11B 21/08, G11B 5/55, G05D 3/12

(54) **CIRCUITRY AND METHOD FOR CONTROLLING POSITIONING OF A HEAD IN A DATA STORAGE DEVICE**
SCHALTUNG UND VERFAHREN ZUR POSITIONSSTEUERUNG EINES KOPFES IN EINEM DATENSPEICHERGERàT
CIRCUIT ET PROCEDE A CONTROLER LE POSITIONMENT DE LA TETE DANS UN APPAREIL D?ENREGISTREMENT

(30) Priority: 27.01.1987 JP 16720/87
(43) Date of publication of application: 18.01.1989
(73) Proprietor: FUJITSU LIMITED, Kawasaki-shi, Kanagawa 211 (JP)
(72) Inventor: NISHIMIYA, Takeshi, Cupertino, CA 95014 (JP)
(74) Representative: Fane, Christopher Robin King
(86) International application number: PCT/JP88/00061
(87) International publication number: WO 88/05594

(56) References cited:
- JP-A- 5 493 788
- JP-A-59 180 859
- JP-A-59 180 860
- JP-A-60 193 175
- US-A- 4 590 526
- US-A- 4 636 883
- PATENT ABSTRACTS OF JAPAN vol. 6, no. 8 (P-98)(886) 19 January 1982, & JP-A-56 134362

## Description

The present invention relates generally to circuitry and a method for controlling positioning of a head of a data storage device and, more specifically, to head positioning control circuitry which is provided in a drive control unit of such a data storage device. Such circuitry can reduce the control processing load of a control circuit used for positioning the head at a target position with respect to a memory medium of the device, and can enable the control unit to maintain tracking with high precision even with memory media of higher densities and high speed movement of the head.

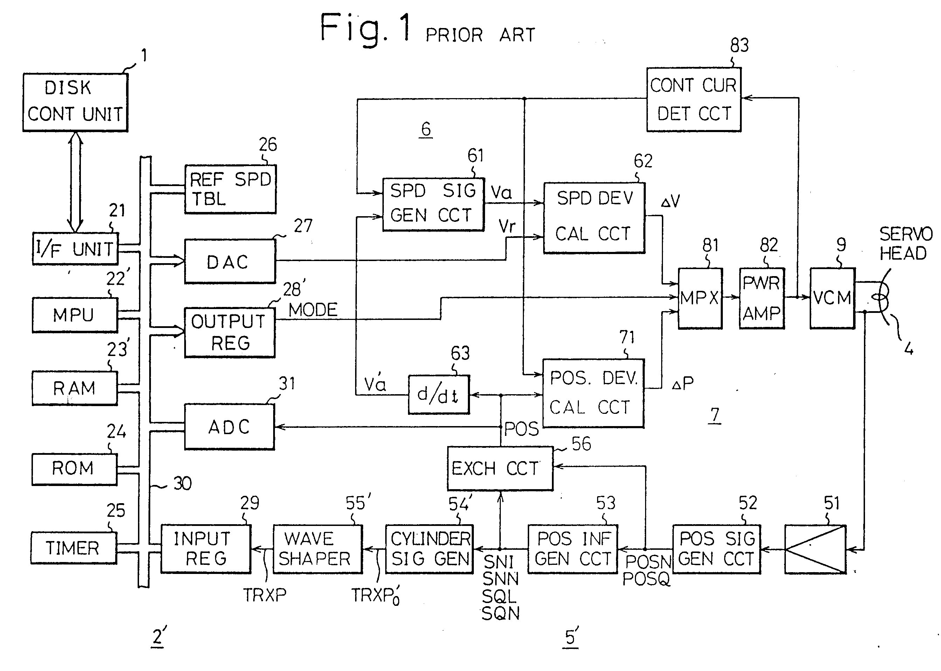

Fig. 1 shows head positioning control circuitry for a magnetic disk apparatus which is one example of a data storage device in which head positioning is performed. The Fig. 1 circuitry includes a magnetic disk control unit connected to a main computer (not shown), a magnetic disk drive control unit 2', a servo head 4 for reading servo information from one magnetic disk, among the magnetic disks, on which such servo information is recorded, a voice coil motor (VCM) 9 which moves the servo head and other magnetic heads (not shown) to a target cylinder, position signal generation means 5' which produces a cylinder (track) position signal based on servo information read by the servo head 4, speed control means 6 which, in a coarse control mode, performs speed control on the servo head 4 to position the servo head at a target cylinder (track), and position control means 7 which, in a fine control mode commencing after completion of the speed control, performs fine position control of the servo head 4 with respect to the target cylinder.

The magnetic disk control unit 1 is provided for performing a buffering function so as to facilitate access to the magnetic disk apparatus without the main computer (host) being affected by the operation of the magnetic disk drive control unit 2' and the magnetic disk drive unit.

The magnetic disk drive control unit 2' includes, mutually connected via a bus 30, an interface (I/F) unit 21, a microprocessor unit (MPU) 22', a random access memory (RAM) 23' which stores control data, etc., a read only memory (ROM) 24 in which programs for operating the MPU 22' and other control information are stored, a timer 25, a ROM 26 which stores a speed control reference table (see below), a digital-analog converter (DAC) 27 which outputs a reference speed signal Vr in the form of an analog value, an output register 28' which outputs a mode signal indicating to a multiplexer 81 whether the circuitry is operating in the coarse mode or the fine mode, an input register 29 which receives as input a track cross pulse TRXP' output from the position signal generation system 5' each time the head crosses a cylinder, and an analog-digital converter (ADC) 31 which receives a signal POS respective of the current head position and converts it to a digital value.

The position signal generation means 5' includes a servo signal amplification circuit 51 which amplifies servo signals detected by the servo head 4, a position signal generation circuit 52, a position information generation circuit 53, a track cross pulse circuit 54', a wave shaper circuit 55', and a signal change circuit 56. Details of these circuits will be given later.

The speed control means 6 includes, for providing the said reference speed signal Vr, the above-mentioned reference speed table ROM 26, MPU 22', and the DAC 27' and also includes, for providing an actual speed signal Va, the above-mentioned circuits 51 to 53 and 56 in the position signal generation system 5', a differential circuit 63 for differentiating the position signal POS to produce an original speed signal Va', a control current detection circuit 83 (part of the VCM 9) for producing a signal used to correct the original speed signal Va', and a speed signal generation circuit 61 connected to receive at its inputs the original speed signal Va' and the signal produced by the control current detection circuit 83 and operable to output a corrected speed signal Va. The speed control means 6 further includes a speed deviation calculation circuit 62 which outputs the difference (coarse mode speed deviation) ΔV between the reference speed signal Vr and the speed signal Va ( $\text{ΔV = Vr - Va}$ ), a multiplexer 81 which can be conditioned to output the coarse mode speed deviation ΔV, a power amplification circuit 82 which amplifies the speed deviation ΔV to a level suitable for driving the VCM 9, and the VCM 9 itself. The reference speed signal Vr is obtained, in dependence upon the difference between the current head position (represented by POS input via the ADC 31) and the target cylinder position, by means of a search of the reference speed table ROM 26 performed by the MPU 22' and is output as a corresponding analog signal via the DAC 27. Further, a negative feedback loop for speed control is formed by the basic speed feedback circuits 51, 52, 53, 56, 63, and 61 and the supplementary speed feedback circuits 83 and 61.

In accordance with a mode signal provided by the output register 28' after the end of the speed control, the position control means 7 is activated by the multiplexer 81 selecting a position deviation signal ΔP produced by a position deviation calculation circuit 71. The position control system 7 performs precise control so that the position deviation signal ΔP, representative of positional deviation of the head 4 with respect to the target cylinder position, always tends to zero. To this end, in the basic position feedback circuit the head position signal POS is derived by the circuits 51, 52, 53, and 56 and the position deviation signal ΔP is provided at the output of the position deviation calculation circuit 71. The control current detection circuit 83 further provides a supplementary position feedback signal for offset correction. Incidentally, the control current detection circuit 83 provides a supplementary signal to both the speed signal generation circuit 61 and the position deviation generation circuit 71. The position deviation signal ΔP is applied to the VCM 9 via the multiplexer 81 and the power amplification circuit 82. The VCM 9 is thus controlled so that the position deviation signal ΔP tends to zero.

When a seek command is received through the magnetic disk control unit 1 from the main computer, the control circuitry of Fig. 1 first performs seek control, that is, performs a speed-controlled track seek operation for positioning the head to the target track position at maximum speed, then switches to position control. In the position control mode, data can be written in or read out.

The MPU 22' has various connections with the magnetic disk control unit via the I/F unit 21 and performs control processing, as required for example for data write and read operations, in the speed control and the position control modes.

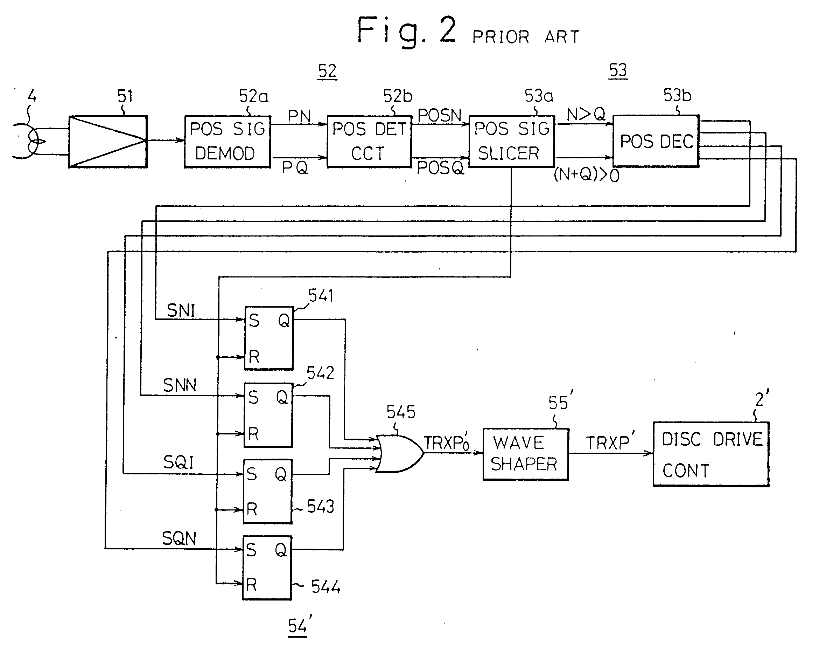

Figure 2 shows in greater detail the conventional position signal generation means 5' of Fig. 1. As shown in Fig. 2, the position signal generation circuit 52 of Fig. 1 includes a position signal demodulation circuit 52a and a position detection circuit 52b. Further, the position information generation circuit 53 of Fig. 1 includes a position signal slicer 53a and a position decoder 53b. The track cross pulse generation circuit 54' of Fig. 1 includes parallel-arranged set-reset type (RS) flipflops (FF) 541 to 544 and OR gate circuit 545. The wave shaper circuit 55' includes a monostable multivibrator.

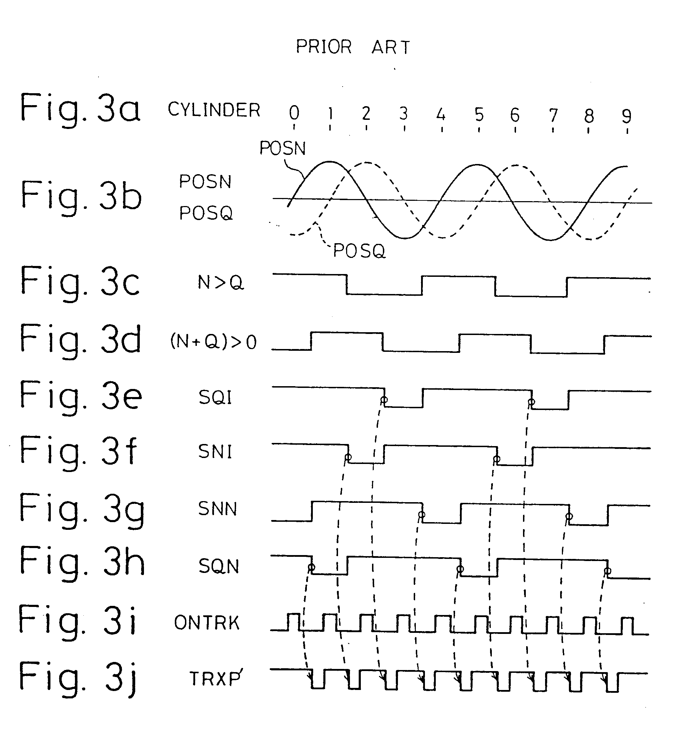

The Figure 2 circuitry generates a track cross pulse based on the orthogonal two-phase servo signals PM and PQ. The operation thereof will be explained with reference to Figs. 3a to 3j. Such circuitry for generating track cross pulses from the orthogonal two-phase servo signals is disclosed in U.S. Patent No. 4,068,269 entitled "Positioning System for Data Storage Apparatus and Record Medium for Use Therewith".

In Fig. 2, the servo signal read by the servo head 4 is amplified by the servo amplification circuit 51 and applied to the position signal demodulation circuit 52a. There, the two intersecting position information components PM and PQ are extracted from the servo signal and converted into two types of orthogonal position signals POSN and POSQ by the position detection circuit 52b, as shown in Fig. 3b. The position signal POSN is representative of the normal component and the position signal POSQ is representative of the quadrature component. These signals are used for the detection of the position of the cylinder. The case illustrated in Fig. 3(b), where POSN leads POSQ, is that in which the servo head 4 is being moved from a small cylinder number to a large cylinder number. Conversely, in the case where POSQ leads POSN the servo head is being moved in the opposite direction. Thus, the signals POSN and POSQ can also be used for detection of the direction of movement of the servo head 4. The numerals 0 to 9 shown in Fig. 3a are cylinder numbers. The POSN signal is a signal which repeats with a period corresponding to four cylinders, as shown by the solid line in Fig. 3b. The POSQ signal is also a signal which repeats with a period corresponding to four cylinders, as shown by the broken line in Fig. 3b. There is a phase difference corresponding to one cylinder between the POSN signal and the POSQ signal.

The position signal slicer 53a compares the respective voltages of the POSN signal and the POSQ signal. When the voltage of the POSN signal becomes larger than the voltage of the POSQ signal, as shown in Fig. 3c the (N > Q) signal changes from "0" to "1". Further when the sum of the voltage of the POSN signal and the voltage of the POSQ signal becomes positive, as shown in Fig. 3d the ( $\text{N + Q > 0}$ ) signal changes from "0" to "1".

The position signal slicer 53a also monitors when the respective voltages of the POSN signal and the POSQ signal are within predetermined positive and negative values and, as shown in Fig. 3i, produces an ontrack (ONTRK) signal indicating whether or not the servo head is on a cylinder. The ONTRK signal is applied to the reset terminal R of the RS flipflops 541 to 544. The position decoder 53b derives from the (N > Q) signal and ( $\text{N + Q > 0}$ 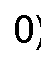 ) signal, as shown in Figures 3e to 3h, row enable position signals SQI, SNI, SNN, and SQN corresponding respectively to the cylinders in a set of four cylinders. The SNI signal is applied to the set of terminal S of the flipflop 541, the SNN signal to the set terminal S of the terminal 541, the SQI signal to the set terminal S of the flipflop 543, and the SQN signal to the set terminal S of the flipflop 544.

The flipflop 541 is set by the trailing edge of the SNI signal and is reset by the rising edge of the ONTRK signal. The flipflop 542 is set by the trailing edge of the SNN signal and is reset by the rising edge of the ONTRK signal. The flipflop 543 is set by the trailing edge of the SQI signal and is reset by the rising edge of the ONTRK signal. The flipflop 544 is set by the trailing edge of the SQN signal and is reset by the rising edge of the ONTRK signal. The OR gate circuit 20 detects the trailing edge of the signals of SQI, SNI, SNN, and SQN from the flipflops and sends the results to the wave shaper circuit 55' (comprising a monostable multivibrator) in the form of original track cross pulses TRXP₀'. The wave shaper circuit 55', as shown in Fig. 3j, outputs cylinder cross pulses TRXP', indicating respectively that the servo head 4 has passed a cylinder, to the magnetic disk drive control unit 2'.

Recent magnetic disk apparatuses use microprocessors such as the MPU 22' as control units so as to reduce the number of parts and achieve smaller sizes and also with a view to reducing cost and achieving higher performance. Therefore, the MPU 22' used is the smallest and most inexpensive possible. However, as mentioned earlier the MPU 22' is required to perform speed control in the seek operation, data read and write control, and interface processing with the magnetic disk control unit 1.

When the MPU 22' performs positioning control of the servo head to a target cylinder in the speed control mode, the above-mentioned cylinder cross pulses TRXP' are used for confirming the distance the servo head has moved toward the desired position, so in principle the successive cylinder cross pulses TRXP' must be input to the MPU 22' via the input register 29. The input period is, for example, 27 ms.

However, recently, there have been demands for high speed operation of magnetic disk apparatuses and the speed of movement of the heads has become much higher, shortening the input period of the cylinder cross pulses. Further, the smaller sizes and higher densities of the magnetic disks themselves have led to a reduction of the cylinder pitch. Therefore, the input periods of the cylinder cross pulses have become even further reduced. As a result, the MPU 22', which receives as input the cylinder cross pulses to perform speed control and also performs other control processing is unable to respond to the received cylinder cross pulses and so cannot perform precise speed control.

As one solution to this problem, it might be possible to use a high performance microprocessor, but this would in turn create the problem of higher costs.

As another solution to the problem, it might be considered to refrain from using a microprocessor for the positioning control circuit and instead to constitute it by a hardware circuit, but this solution would result in complicated circuitry and thus an increase in the number of parts, increased costs, and a large size of apparatus.

Yet another solution to the above problem, disclosed for example in JP-A-59-180859 (entitled "Speed Control Apparatus for a Magnetic Disk Apparatus"), calls for the head drive motor to be accelerated upon actuation, run at a high speed, and decelerated near the target cylinder. Until the end of the high-speed running of the head, i.e. until the head drive motor enters the deceleration phase, the cylinder cross pulses are generated at short intervals but are subjected to frequency division to halve their frequency before they are input to the MPU so as to lighten the load thereon. When the head drive motor enters the deceleration phase, such frequency division is stopped and the full-frequency cylinder cross pulses are input to the MPU. Such frequency halving takes place when the head is in the middle of movement and does not affect the precision of final positioning to a significant extent and, further, lightens the load on the MPU in the high speed running phase on the motor during which high frequency cylinder cross pulses are generated, so may be said to equivalent to applying the cylinder cross pulses intermittently. However, this solution requires a speed signal generation circuit to produce the frequency-divided pulses and also requires that the MPU engage in processing to detect when the head drive motor has entered the deceleration phase and to stop the frequency division at that time, so there is the problem that the overall circuitry becomes complicated. Further, this solution suffers from uncertainty in the detection of when the head drive motor has entered the deceleration phase and, due to the fact that until the deceleration phase it just divides the cylinder cross pulses but then switches from frequency-divided cylinder cross pulses to non-divided (full-frequency) cylinder cross pulses, there are cases where there results a deviation of one cylinder cross pulse. Thus, when switching from the coarse control mode to the fine control mode, there are cases where there results a one-cylinder deviation with respect to the target cylinder. This one cylinder deviation cannot be corrected under fine control.

Further, JP-A-59-180860, entitled "Speed Control Apparatus for Magnetic Disk Apparatus", proposes to lighten the load on the MPU by constantly dividing the cylinder cross pulses and speed controlling the magnetic head based on the frequency-divided cylinder cross pulses. This proposal limits operation of the drive system of the magnetic disk apparatus in accordance with the capacity of the MPU, which is contrary to the inherent purpose of performing high speed seek control, namely to operate the drive system of the magnetic disk apparatus so as to attain maximum performance therefrom. It thus runs counter to the basic idea of the control and, since it uses only frequency-divided cylinder cross pulses, the above-mentioned one-cylinder deviation of the final head position can occur.

JP-A-60-193175, entitled "Head Positioning System", is also concerned with lightening the load of the MPU and eliminating the inaccuracy of positioning precision of the prior art mentioned above. For this purpose, it provides a counter circuit, external to the MPU, for counting the cylinder cross pulses so as to accurately monitor the position of the magnetic head, the count value of the counter circuit being applied to the MPU. As described above in connection with JP-A-59-180859, the MPU is interrupted by half-frequency cylinder cross pulses before the head drive motor enters the deceleration phase and, when the head motor enters the deceleration region, is interrupted by non-divided (full-frequency) cylinder cross pulses. At each interrupt the MPU receives as input the count value of the counter circuit. However, this head positioning system has the problem of higher cost, since it requires an external counter circuit and the processing for the same becomes complicated.

Above, an example was given of loading of the microprocessor used for head positioning control in the case in which the data storage device is a magnetic disk apparatus, but the above problems also apply to the use of a microprocessor in an optical disk apparatus, opto-magnetic disk apparatus, and the like which perform head positioning simultaneously with other control processing.

According to a first aspect of the present invention, there is provided head positioning control circuitry for a data storage device including a rotary disk and a head moveable over the disk between different servo tracks recorded thereon for use in positioning the head in relation to the disk, which circuitry includes: position signal generation means having a position information generation circuit that is operable to derive position information from signals produced in the head when it crosses such tracks, which information is dependent upon the current track position of the head relative to the disk, and having track cross pulse generation means for deriving from that information respective track cross pulses indicative of movement of the head across individual servo tracks; and speed control means, having a control circuit connected to the said position signal generation means for receiving therefrom and operating in dependence upon such track cross pulses, operable to perform a speed-controlled track seek operation for causing the said head to be moved, from its track position at the start of the operation to a selected target track position, in dependence upon a stored measure dependent upon the difference between the said selected target track position and the current track position of the head; characterised in that the said control circuit is such that: at the start of the said track seek operation, if the target track position is an odd track position the said track cross pulse generation means are conditioned to produce track cross pulses, during the track seek operation, only when odd tracks on the disk are crossed by the head, but if the target track position is an even track position the said track cross pulse generation means are conditioned to produce track cross pulses, during the track seek operation, only when even tracks on the disk are crossed by the head; when the first track cross pulse is produced during the track seek operation the said stored measure is reduced in magnitude by 1 or 2 in order that, if the magnitude of said measure is initially odd, it becomes even; and whenever a track cross pulse is produced subsequently during that operation the magnitude of the said stored measure is reduced by 2.

Such head positioning control circuitry can facilitate high-speed and high-precision head positioning in the data storage device while lightening the load of the control circuit used for the head positioning control.

Further, such head positioning control circuitry can be realised using a simple circuit construction and simple interface.

In a preferred embodiment the said control circuit includes a microprocessor unit which operates in dependence upon the said track cross pulses.

The track cross pulse generation means may advantageously include a first gate circuit operable to produce the even track cross pulses in dependence upon first position information derived by the said position signal generation means, a second gate circuit operable to produce the odd track cross pulses in dependence upon second position information derived by the said position signal generation means, an even pulse latch circuit which can be set selectively by the said control circuit in order to cause the even track cross pulses produced by the first gate circuit to be applied to the said control circuit during the said track seek operation, and an odd pulse latch circuit which can be set selectively by the said control circuit in order to cause the odd track cross pulses produced by the second gate circuit to be applied to the control circuit during the track seek operation.

Preferably the said position signal generation means includes a position signal generation circuit operable to generate orthogonal two-phase servo signals in dependence upon the said signals produced in the head as it crosses the said servo tracks, the said position signal generation circuit being operable to generate four types of position information in dependence upon the said two-phase servo signals; the said first gate circuit of the said track cross pulse generation means is operable to generate the said even track cross pulses in dependence upon two of the said types of position information, which two types correspond to one orthogonal phase; and the said second gate circuit of the said track cross pulse generation means is operable to generate the said odd track cross pulses in dependence upon the other two types of position information which correspond to the other orthogonal phase.

In another preferred embodiment the track cross pulse generation means includes: a D-type flipflop, and an AND gate circuit, connected for receiving from the said position signal generation means full-frequency track cross pulses produced thereby as the head crosses each individual servo track during the track seek operation, and operable in response to alternate ones of those full-frequency track cross pulses received during the operation to produce half-frequency track cross pulses; an even pulse latch circuit having an output connected to a preset terminal of the said D-type flipflop and operable in dependence upon the control circuit to apply a pulse to that terminal at the start of the said track seek operation so that during that operation the said track cross pulse generation means produces the said half-frequency track cross pulses in response to the second and each alternate successive full-frequency track cross pulse produced by the position generation means; and an odd pulse latch circuit having an output connected to a clear input of the said D-type flipflop and operable in dependence upon the control circuit to apply a pulse to that terminal at the start of the said track seek operation so that during that operation the said track cross pulse generation means produces the said half-frequency track cross pulse in response to the first and each alternate successive full-frequency track cross pulse produced by the position signal generation means.

Preferably the said position signal generating means includes a position signal generation circuit operable to generate orthogonal two-phase servo signals in dependence upon the said signals produced in the head as it crosses the said servo tracks, the said position information generation circuit being operable to generate four types of position information in dependence upon the said two-phase servo signals, and also includes a track cross pulse generation circuit operable to produce the said full-frequency track cross pulses in dependence upon the said four types of position information; and the said full-frequency track cross pulses produced by the said track cross pulse generation circuit are applied to the clock terminal of the said D-type flipflop and to one input terminal of the said AND gate circuit, one of the outputs of the D-type flipflop being connected to the D input terminal thereof, and the other output of the said D-type flipflop being connected to the other input terminal of the said AND gate circuit.

Advantageously the head positioning control circuitry is such that if the magnitude of the said difference, between the said selected target track position and the said track position at the start of the track seek operation, exceeds a predetermined value then, during the said track seek operation, the said control circuit receives as input and operates in dependence upon either the odd track cross pulses or upon the even track cross pulses produced by the said track cross pulse generation means; whereas if the magnitude of that difference does not exceed the said predetermined value then, during the said track seek operation, the said control circuit receives as input and operates in dependence upon full-frequency track cross pulses produced by the said position signal generation means when each individual track on the disk is crossed by the head.

According to a second aspect of the present invention there is provided a method of controlling the position of a head of a data storage device, which head is movable over a rotary disk included in the device between different servo tracks recorded on the disk for use in positioning the head in relation to the disk, the device having circuitry operable to derive from signals produced in the head when it crosses such tracks respective track cross pulses which are employed by the device to monitor movement of the head across the said individual servo tracks during a speed-controlled track seek operation for causing the head to be moved, from its track position at the start of the operation to a selected target track position, in dependence upon a stored measure dependent upon the difference between the said selected target track position and the current track position of the head, which method comprises the steps of: at the start of the said track seek operation, if the target track position is an odd track position, conditioning the said circuitry to produce track cross pulses, during the track seek operation, only when odd tracks on the disk are crossed by the head but, if the target track position is an even track position, conditioning the said circuitry to produce track cross pulses, during the track seek operation, only when even tracks on the disk are crossed by the head; commencing movement of the said head, at a predetermined reference speed, from its said track position at the start of the operation to the said selected target track position; and during such movement of the head, when the first track cross pulse is produced by the said circuitry reducing the said stored measure in magnitude by one or two in order that, if the magnitude of said measure is initially odd, it becomes even, and whenever a track cross pulse is produced subsequently by the said circuitry during such movement, reducing the magnitude of the said stored measure by two.

Reference will now be made, by way of example, to the accompanying drawings, in which:-
Figure 1 is a block diagram of conventional head positioning control circuitry for a magnetic disk apparatus;
Fig. 2 is a block diagram of a head positioning portion of the Fig. 1 circuitry;
Figs. 3a to Fig. 3j are timing charts showing the generation of cylinder cross pulses by the head positioning portion of Fig. 2;
Fig. 4 is a block diagram of head positioning circuitry, suitable for use in a magnetic disk apparatus, according to a first embodiment of the present invention;
Fig. 5 is a circuit diagram of a head positioning portion included in the Fig. 4 circuitry;
Figs. 6a to Fig. 6j are timing charts showing the generation of cylinder cross pulses in the head positioning portion of Fig. 5;
Figs. 7a to 7g are operational charts showing how positioning is performed, to reach a target cylinder, by the head positioning portion of Fig. 5;
Figs. 8a to 8c are flow charts illustrating positioning control operations carried out in the head positioning portion of Fig. 5;
Fig. 9 is a circuit diagram of a head positioning portion of head positioning control circuitry, suitable for use in a magnetic disk apparatus, according to another embodiment of the present invention;
Figs. 10a to 10c are operational charts showing how positioning is performed, to reach a target cylinder, by the head positioning portion of Fig. 9; and
Figs. 11a to 11c are flow charts illustrating positioning control operations carried out in the head positioning portion of Fig. 9.

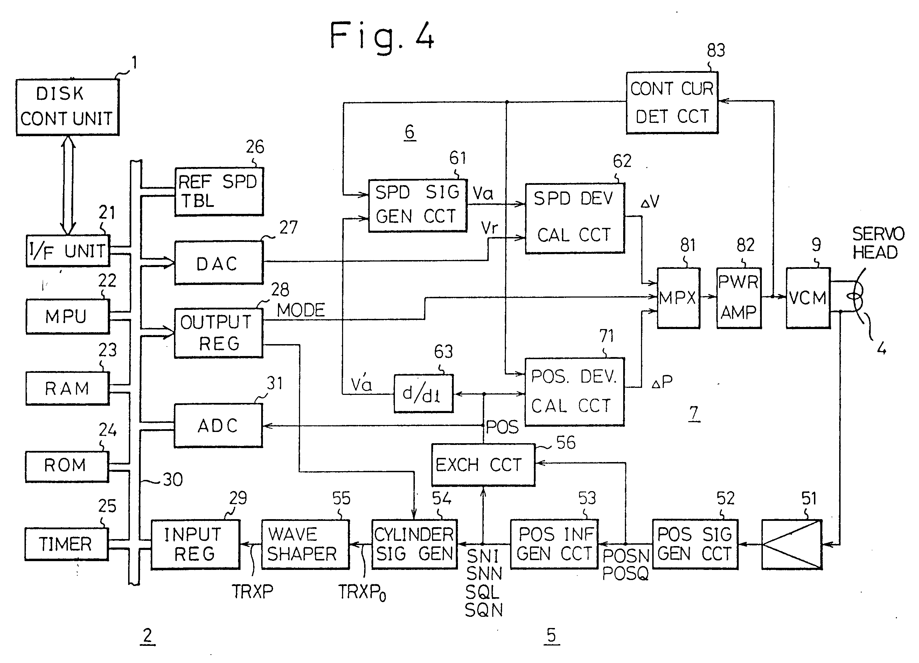

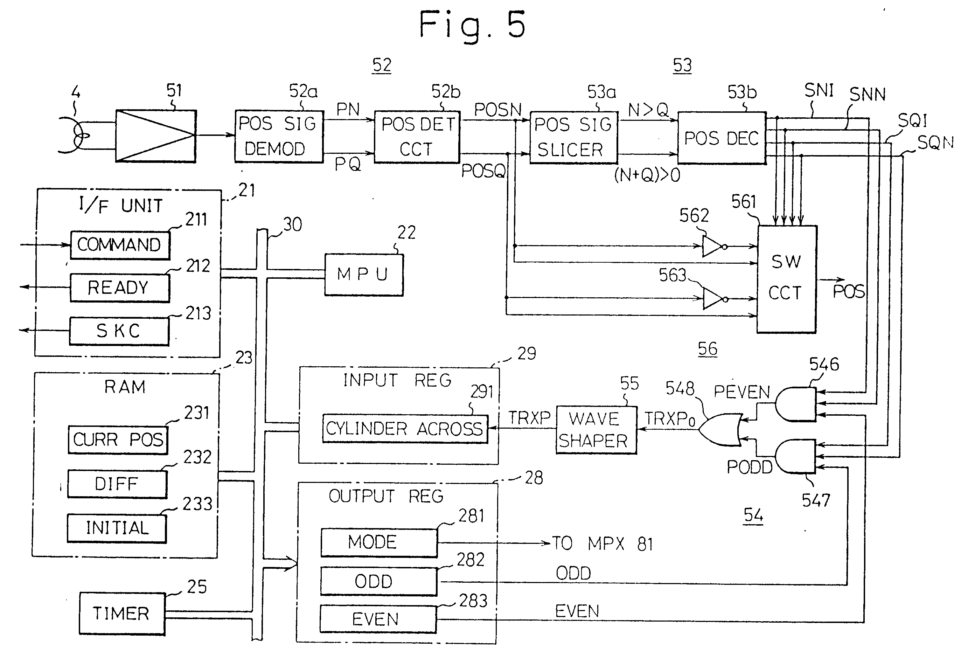

The head positioning control circuitry shown in Fig. 4 is similar in many respects to the circuitry shown in Fig. 1, and in the Fig. 4 circuitry, as in the Fig. 1 circuitry, a voice coil motor (VCM) 9, used as a head drive actuator, is subjected to speed control in the coarse control mode to move the servo head 4 to a target cylinder (track) in response to a seek command from a magnetic disk control unit 1, and then the servo head is positioned accurately at the target cylinder in the fine control mode. However, as described in detail hereinafter with reference to Fig. 5, in the Fig. 4 circuitry the track cross pulse generation circuit 54 in the position signal generating means 5 (which constitutes part of the speed control means), and the magnetic disk drive control unit 2 are different from the corresponding parts of the Fig. 1 circuitry.

Figure 5 shows the head positioning portion of the head positioning control circuitry shown in Fig. 4. In the head positioning portion of Fig. 5, the following elements are the same as those described with reference to Fig. 2, namely: the servo head 4; the position signal circuit 52, which comprises the position signal demodulation circuit 52a and the position detection circuit 52b, and which generates the orthogonal two-phase position signals POSN and POSQ; and the position information generation circuit 53, which comprises the position signal slicer 53a and the position decoder 53b, and which generates four types of position information SNI, SNN, SQI, and SQN. The signal change circuit 56 outputs a position signal POS with a predetermined slope based on the two-phase position signals POSN and POSQ. That is, when the phase relationship of the signals POSN and POSQ is reversed in accordance with the direction of movement of the head, the slope of the sine wave illustrated in Fig. 3b reverses. To this end, in the signal change circuit 56 the signals POSN and POSQ are applied directly to the switch circuit 561 and are also inverted by the inverters 562 and 563 respectively and applied in inverted form to the switch circuit 561 so that, in dependence upon the position information SNI, SNN, SQI, and SQN from the position decoder 53b, the signal charge circuitry 56 outputs a position signal POS with a predetermined slope.

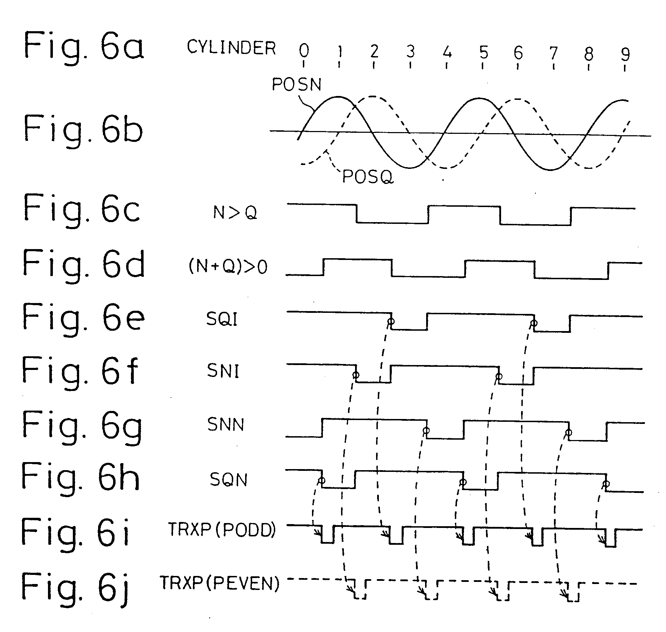

The track cross pulse generation circuit 54 comprises two AND gate circuits 546 and 547 and an OR gate circuit 548. When an enable signal (EVEN) is applied to the AND gate 546 by an EVEN pulse latch 283 in an output register 28 (described hereinbelow) the AND gate circuit 546 is operable to output an even cylinder (track) cross pulse PEVEN at the trailing edge of the position information SNI and SNN, as shown in Fig. 6f, Fig. 6g, and Fig. 6j. When an enable signal (ODD) is applied to the AND gate circuit 547 by an ODD pulse latch 282 in the output register 28 the AND gate circuit 547 is operable to output an enable odd cylinder (track) cross pulse PODD at the trailing edge of the position information SQI and SQN, as shown in Fig. 6e, Fig. 6h, and Fig. 6i. The OR gate circuit 548 outputs either the odd cylinder cross pulses PODD or the even cylinder cross pulses PEVEN, as track cross pulses TRXP₀, to the wave shaper circuit 55.

The wave shaper 55 comprises, for example, a monostable multivibrator. The wave shaper circuit 55 wave-shapes the track cross pulses TPXP₀ and applies the wave-shaped track cross pulses TRXP to a cylinder cross pulse latch 291 in an input register 29. The value stored in the cylinder cross pulse latch 291 can be input to the MPU 22 via the bus 30.

The output register 28 connected through the bus 30 to the MPU 22 has the afore-mentioned ODD latch 282 and EVEN latch 283 and also a MODE latch 281. In a seek operation, the MPU 22 sets the MODE latch 281 to select the coarse control mode. This causes the multiplexer 81 (Fig. 4) to output the speed deviation signal ΔV generated by the speed deviation calculation circuit 62 to the power amplifier 82, whereupon speed control is performed. When the servo head is positioned over a target cylinder and the seek operation is completed, the MPU 22 resets the MODE latch 281. This causes the multiplexer 81 to output the position deviation signal ΔP generated by the position deviation calculation circuit 71 to the power amplifier 82, and precision positioning control with respect to the target cylinder is performed in the fine control mode.

The RAM 23 has a current position memory 231 which stores the current head position, a difference memory 232 which stores a measure of cylinder movement (cylinder movement difference) DIFF (described below) and an initial flag 233.

The interface (I/F) unit 21 has a command register 211, a ready register 212, and a seek completion (SKC) register 213 for facilitating communication between the magnetic disk control unit 1 and MPU 22.

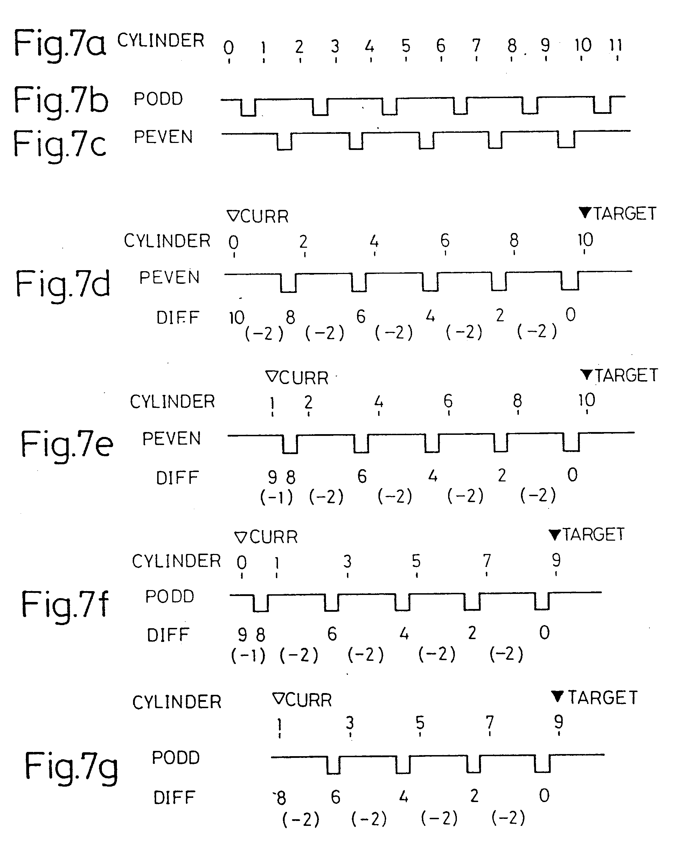

Figures 7a to 7c, corresponding respectively to Fig. 6a, Fig. 6i and Fig. 6j, show that the odd cylinder cross pulses PODD or the even cylinder cross pulses PEVEN are output from the AND gate circuits 547 and 546 when the head crosses alternate cylinders. Figs. 7d to Fig. 7g show how the cylinder movement difference DIFF should be updated, in response either to the odd cylinder cross pulses or to the even cylinder cross pulses, in dependence upon the relationship between the current position CURR and the target cylinder TARGET. As shown by Figs. 7a to 7c, in dependence upon the signals SNI, SNN, SQI, and SQN from the position information generation circuit 53, the cylinder cross pulses TRXP produced at each cylinder crossing are divided into a set of odd cylinder cross pulses PODD and a set of even cylinder cross pulses PEVEN. When one of these sets of cylinder cross pulses is used exclusively for positioning control of the head, there are four possible cases as shown in Fig. 7d to Fig. 7g respectively.

Figure 7d shows that when, at the start of a track seek operation, the current position CURR is an even cylinder, for example 0, and the target cylinder TARGET is also even, for example 10, the set of cylinder cross pulses used for positioning control is to be the even set of cylinder cross pulses PEVEN since the target cylinder TARGET is even. Next, the cylinder movement difference DIFF, representing the difference between the target track position and the current track position, is reduced by 2 at the time when the first even cylinder cross pulse is produced. Subsequent to this, it is subtracted by 2 each time an even cylinder cross pulse PEVEN is produced. This is because the even cylinder cross pulses are produced only at every other track crossing. When DIFF = 0, the head is positioned at the target cylinder.

Figure 7e shows that when, at the start of a track seek operation, the current position CURR is an odd cylinder, for example 1, and the target cylinder TARGET is even, for example 10, since the target cylinder TARGET is even, use is made of the even set of cylinder cross pulses PEVEN for the positioning control. Further, the cylinder movement difference DIFF is reduced by 1 at the time when the first even cylinder cross pulse is produced and thereafter reduced by 2 for each even cylinder cross pulse produced.

Fig. 7f shows that when, at the start of a track seek operation, the current position CURR is 0 (even) and the target cylinder TARGET is 9 (odd), use is made of the odd set of cylinder cross pulses PODD for positioning and the cylinder movement difference DIFF is reduced by 1 at the first odd cylinder cross pulse.

Figure 7g shows that when, at the start of a track seek operation, the current position CURR is 1 (odd) and the target cylinder TARGET is 9 (odd), use is made of the odd set of cylinder cross pulses PODD for the positioning and the cylinder movement difference DIFF is reduced by 2 at the first odd cylinder cross pulse.

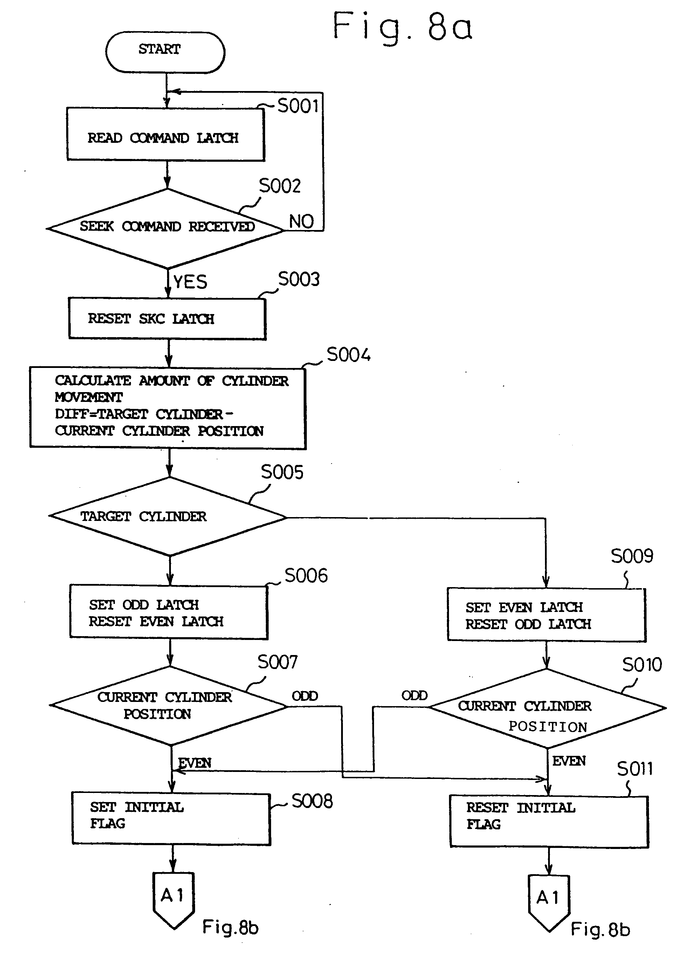

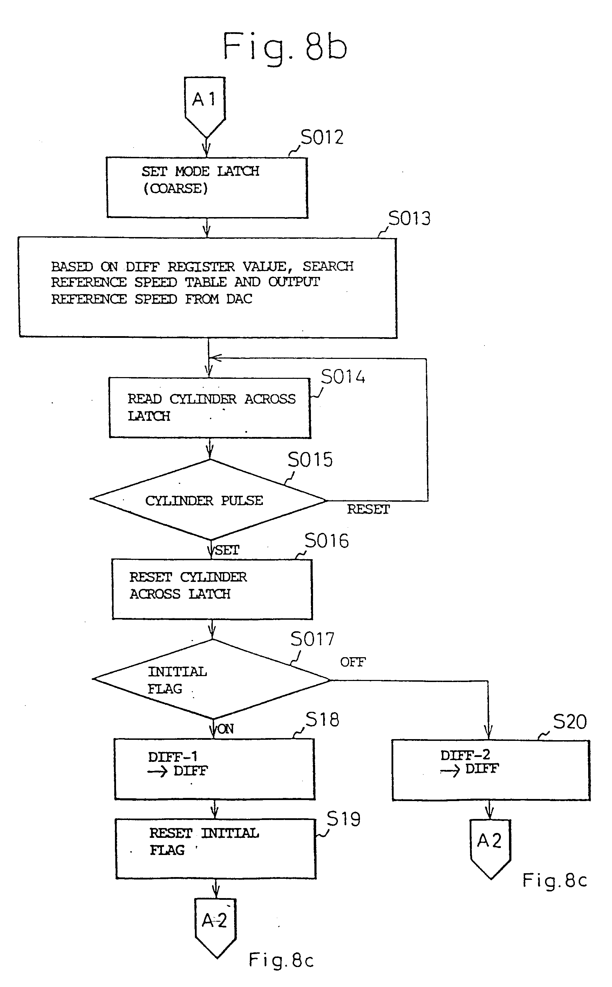

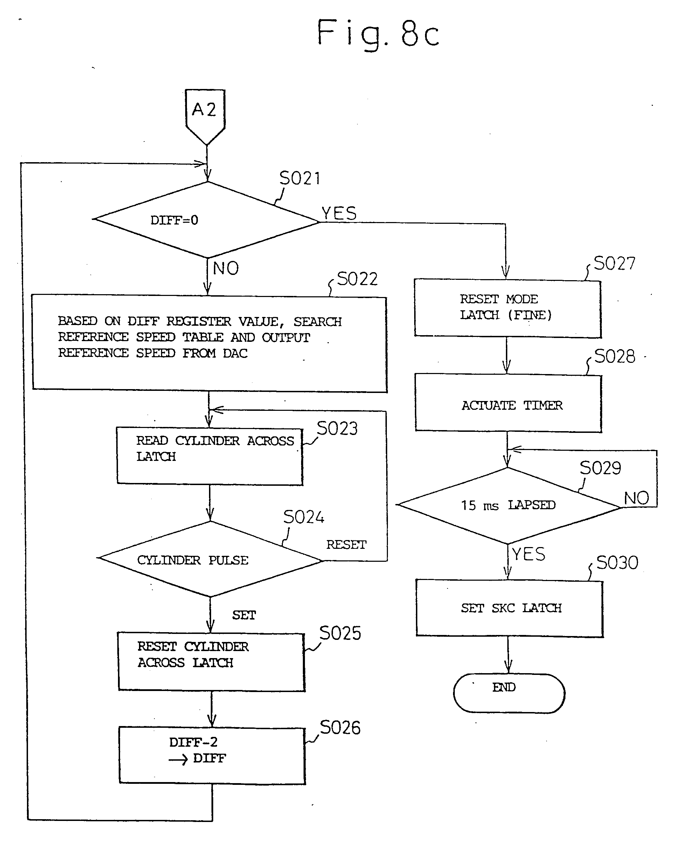

Operation of the head positioning portion of Fig. 5 when performing head positioning control in the above four cases will now be explained with reference to the flow charts of Fig. 8a to Fig. 8c.

### Steps S001 and S002

The MPU 22 reads the COMMAND latch 211 in the I/F unit 21 (S001) and checks if a seek command has been issued from the magnetic disk control unit 1 (S002). If no seek command has been issued (NO), the above operation is repeated so the MPU stands by until a seek command is issued.

### Steps S003 and S004

When a seek command is issued, the MPU 22 resets the seek completion (SKC) latch 213 in the I/F unit 21 (S003). By this, it prohibits the issuance of a new seek command until the completion of the current seek operation.

The MPU 22 receives as input, along with the seek command, the target cylinder and stores the same in the current position memory 231 in the RAM 23. Further, the MPU 22 subtracts the current cylinder position of the current position memory 231 in the RAM 23 from the received target cylinder and calculates the cylinder movement difference DIFF (S004). This cylinder movement difference thus represents the difference between the target track position and the current track position balance and is stored in the difference memory 232 in the RAM 23.

### Steps S005 to S011

The MPU 22, in accordance with the cases illustrated in Fig. 7d to Fig. 7g, decides whether to use the odd cylinder cross pulses or even cylinder cross pulses in positioning the heads. If the odd cylinder cross pulses PODD are to be used (i.e. if the target cylinder position is odd), the MPU 22 sets the ODD latch 282 in the output register 28 and resets the EVEN latch 283 (S005 and S006). If, on the other hand, even cylinder cross pulses PEVEN are to be used (i.e. if the target cylinder position is even) the MPU 22 sets the EVEN latch 283 and resets the ODD latch 282 (S005 and S009).

Next, the MPU 22 decides on the state of the initial flag which is used to determine whether to subtract 1 or subtract 2 from the cylinder movement difference DIFF in response to the initial cylinder cross pulse. When the initial flag is "1", the cylinder movement difference DIFF will be reduced initially by 1 and, when it is "0", DIFF will be reduced initially by 2. Therefore, when the current cylinder position and the target cylinder have the values shown in Fig. 7e and Fig. 7f, the MPU 22 sets the initial flag (S007, S010, and S008). On the other hand, when the current cylinder position and the target cylinder position are as shown in Fig. 7d and Fig. 7g, the MPU 22 resets the initial flag (S007, S010, S011).

### Steps S012 to S020

The MPU 22 sets the MODE latch 281 in the output register 28 and selects the coarse control mode, i.e. the speed control mode (S012).

Next, the MPU 22 searches the reference speed table in the reference speed table ROM 26 in dependence upon on the cylinder movement difference DIFF, reads the appropriate digital reference speed value for the VCM from the table, and applies that digital value to the DAC which outputs an analog reference speed signal Vr to the speed deviation calculation circuit 62 (S013). As a result, the head is moved by the VCM 9 toward the target cylinder in accordance with the reference speed signal Vr.

When the head moves, in accordance with the status of the ODD latch 282 and EVEN latch 283 either odd cylinder cross pulses PODD or even cylinder cross pulses PEVEN are output from the track cross pulse generation circuit 54, causing the cylinder cross pulse latch 291 to be set. The MPU 22 waits for the cylinder cross pulse latch 291 to be set (S014 and S015).

When the cylinder cross pulse latch 291 is set, the MPU 22 resets the cylinder cross pulse latch 291 (S016) so that the next cylinder crossing may be detected.

When the initial flag is set, in response to the above-mentioned initial cylinder cross pulse the MPU 22 subtracts 1 from the cylinder movement difference DIFF (DIFF ← DIFF-1) (S018) and then resets the initial flag (S019). If the initial flag is reset, the MPU subtracts 2 from the DIFF (DIFF ← DIFF-2) in response to the initial cylinder cross pulse (S020).

### Steps S021 to S026

After this, the MPU performs the following operations until DIFF = 0, i.e. until the head reaches the target cylinder.

In accordance with DIFF, the MPU outputs the reference speed to speed deviation calculation circuit 62 (S022) and performs speed control.

The MPU then detects the fact that the cylinder cross pulse latch 291 is set (S023 and S024) and resets the cylinder cross pulse latch 291 (S025). The cylinder cross pulses, i.e. the odd cylinder cross pulses PODD or the even cylinder cross pulses PEVEN, are produced every two cylinders, so the MPU 22 subtracts 2 from DIFF (S026).

Here, the cylinder cross pulse latch 291 is set each time the heads move across two cylinders, so the operation of the MPU 22 of steps S021 to S026 may be performed at time intervals corresponding to two cylinders of movement, i.e. at twice the time intervals of the Fig. 2 head positioning portion, and the operating speed of the MPU 22 in the Fig. 5 portion may be half that of the Fig. 2 portion. Therefore, the load of the MPU is lightened by half.

### Steps S021 and S027 to S030

When DIFF becomes zero (S021), the MPU 22 resets the MODE latch 281 (S027) and switches from the coarse control mode to the fine control mode. Therefore, after this, precision positioning control is performed at the target cylinder.

When DIFF becomes zero, the head is always positioned at the target cylinder, as explained hereinbefore with reference to Fig. 7d to Fig. 7g. Therefore, the switching from the coarse control mode to the fine control mode at step S027 is performed after positioning the head accurately at the target cylinder in exactly the same way as in the case of the positioning described in the introduction in which a cylinder cross pulse is produced at every cylinder crossing.

The MPU 22 performs the setting operation. That is, it actuates the timer 25 (S028) and waits for 15ms (S029).

Next, the MPU 22 sets the seek completion latch 213 (S030) and notifies the magnetic disk control unit 1 of the completion of the seek operation.

As described above, in the first embodiment of the present invention a set of odd cylinder cross pulses and a set even cylinder cross pulses, each comprising alternate cylinder cross pulses, are generated by a track cross pulse generation circuit 54 and, depending on whether the target cylinder position is odd or even, a decision is made on which of the sets is to be used in the speed-controlled track seek operation. In accordance with the current cylinder position at the start of the operation, an initial value, to be subtracted from the cylinder movement balance when an initial cylinder cross pulse is input, is determined. After this, use is made of the half-frequency odd cylinder cross pulses or even cylinder cross pulses for accurate positioning control to the target cylinder. During this positioning control, the cylinder cross pulses applied to MPU 22 have a frequency of half that of the original (full-frequency) cylinder cross pulses, so the load of the MPU 22 is lightened by a factor of two. Therefore, if it desired to increase the speed of movement of the head and/or to shorten the cylinder pitch, the MPU 22 can deal adequately with the applied pulses.

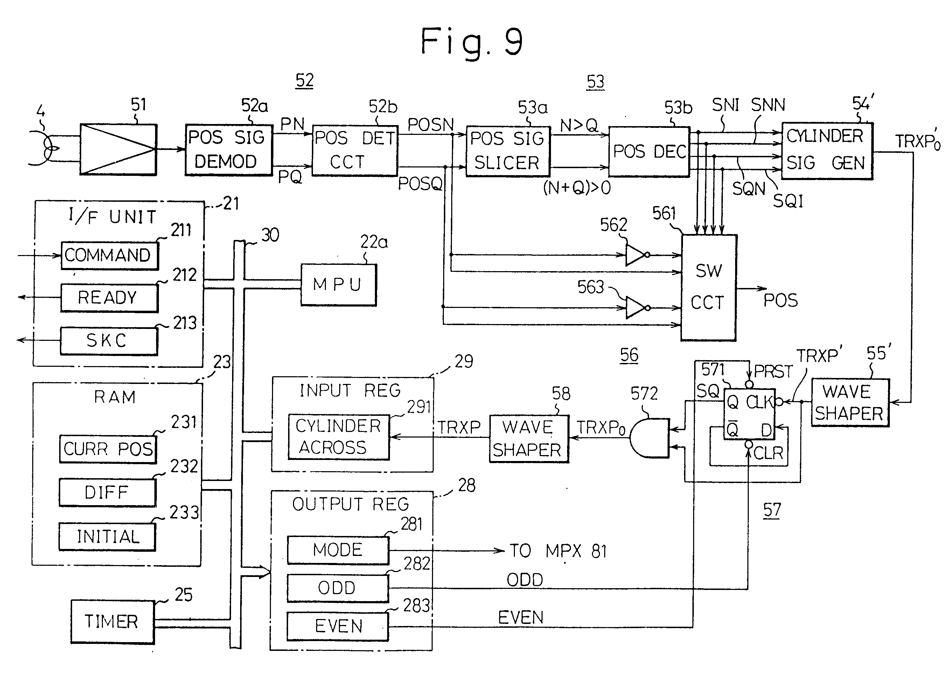

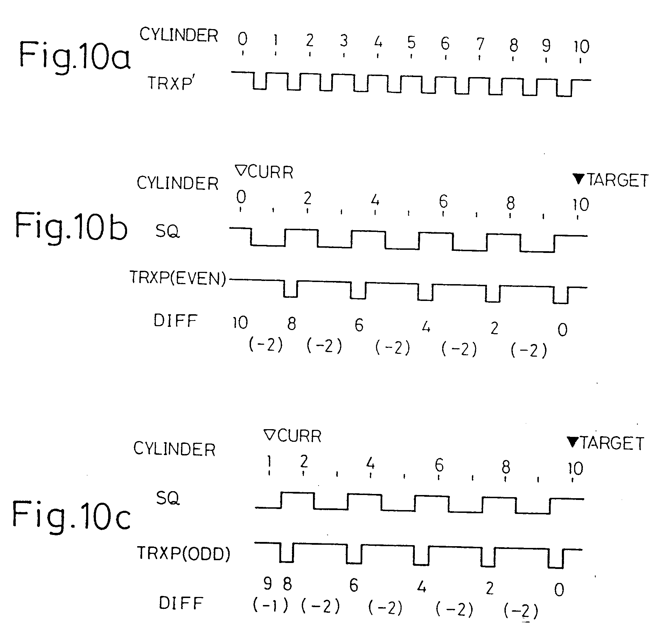

A second embodiment of the head positioning control circuitry of the present invention will now be described with reference to Fig. 9. In this circuitry the head positioning portion, shown in Fig. 9, includes a second track cross pulse generation circuit 57 and a wave shaper circuit 58 connected to the output of the track cross pulse generation circuit 54' and the wave shaper circuit 55' shown in Fig. 2, at which output full-frequency track cross pulses TRXP' are produced as shown in Fig. 10a.

The second track cross pulse generation circuit 57 comprises a D-type flipflop 571 and an AND gate circuit 572, as illustrated. That is, the track cross pulses TRXP' are applied to the inverse clock terminal CLK of the D-type flipflop 571 and to the AND gate 572. The inverted output Q of the D-type flipflop 571 is connected to the D input terminal thereof. As a result the D-type flipflop 571 operates as a divided-by-two frequency divider. Further, the output of the ODD latch 282 is connected to the preset terminal PRST of the D-type flipflop 571, and the output of the EVEN latch 283 is connected to the clear terminal CLR of the D-type flipflop 571. The wave shaper circuit 58 comprises a monostable multivibrator.

The head positioning portion of Fig. 9 does not generate two sets of frequency divided pulses (i.e. the odd cylinder cross pulses and even cylinder cross pulses) as in the case of the head positioning portion of Fig. 5, but generates a single set of half-frequency (divided) track cross pulses TRXP. However, to perform the same processing as in Fig. 7d to Fig. 7g (explained with reference to the head positioning portion of Fig. 5), as shown in Fig. 10b and Fig. 10c the output timing of the Q output SQ of the D-type flipflop 571 is determined by the initial value of the cylinder movement difference DIFF and a conditioning pulse is applied to the flipflop 571 at the start of the track seek operation for conditioning the second track cross pulse generation circuit to produce (at the output of the AND gate 572), during the operation, either an "even" set of cylinder cross pulses (Fig. 10b, TRXP (EVEN)), made up of alternate even TRXP' pulses (i.e. the second, fourth, sixth .... TRXP' pulses) produced by the wave shaper circuit 55' during the operation, or an "odd" set of cylinder cross pulses (Fig. 10c, TRXP(ODD)), made up of alternate odd TRXP' pulses (i.e. the first, third, fifth .... TRXP' pulses) produced by the wave shaper circuit 55' during the operation.

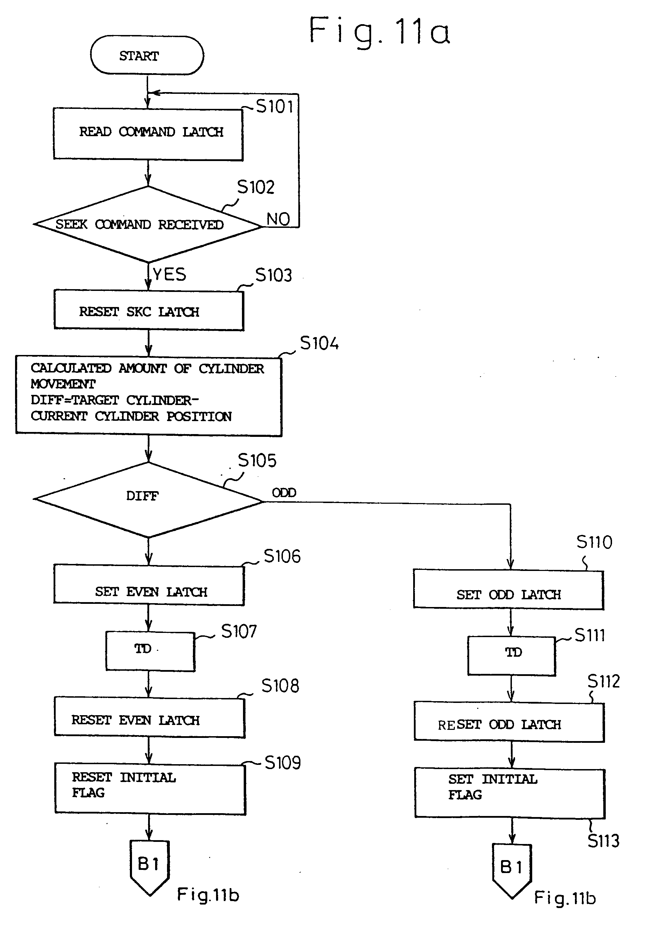

Therefore, as shown by steps S105 to S113 in Fig. 11a, if DIFF is even, the MPU 22a initially sets the EVEN latch 283 (S106), waits a predetermined time (S107), and then resets the EVEN latch 283 (S108), thereby causing the EVEN latch 283 to output a preset pulse to the preset terminal PRST of the D-type flipflop. On the other hand, if DIFF is odd, the MPU 22a initially sets the ODD latch 282 (S110), waits a predetermined time (S111), and then resets the ODD latch again 282 (S112), thereby causing a clear pulse to be output from the ODD latch 282 to the clear terminal of the D-type flipflop 571.

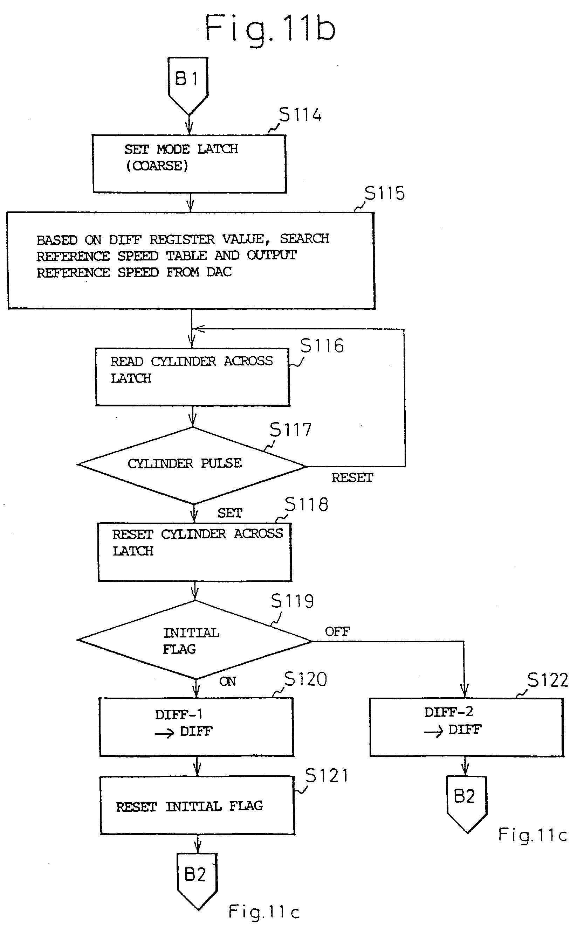

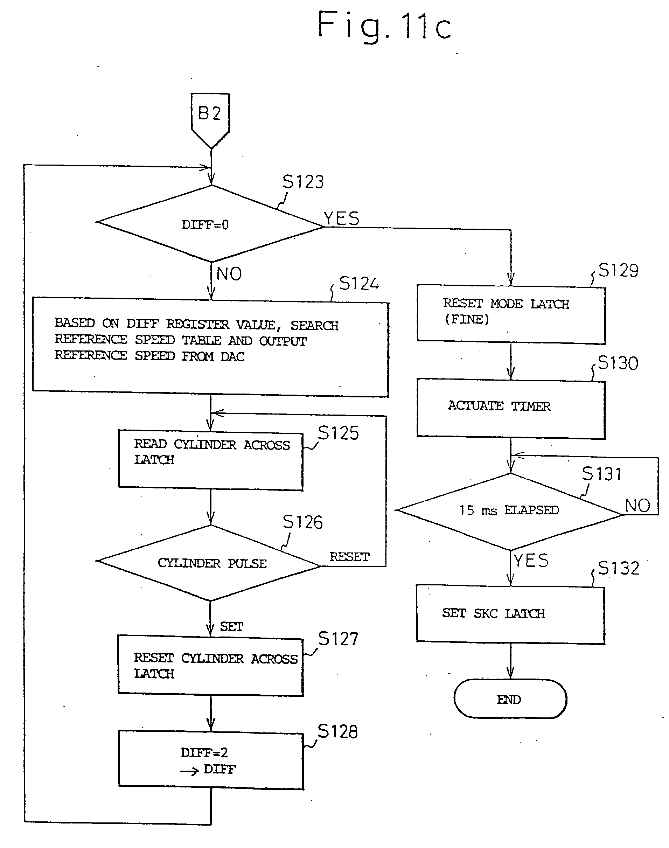

In Fig. 10b and Fig. 10c, the initial adjustment of DIFF, in response to production of the divided cylinder cross pulse, is determined in accordance with whether the initial value of the cylinder movement difference DIFF is even or odd. For this reason, at step S109 in Fig. 11a, the initial flag is reset if DIFF is initially even whereas, at step S113, the initial flag is set if DIFF is initially odd. In accordance with the setting or resetting of the initial flag, the initial adjustment of the DIFF is performed at steps S119 to S122 in Fig. 11b in the same way as steps S017 to S020 in Fig. 8b.

Operation of the Fig. 9 head positioning portion is otherwise the same as that of Fig. 5 explained with reference to Fig. 8a to Fig. 8c.

The above embodiments were described in relation to the case in which the amount of head movement in the seek operation was two cylinders or more. When the amount of head movement upon receipt of a seek command is one cylinder, the initial odd cylinder cross pulse or even cylinder cross pulse is input and the seek operation completed.

Also, operation of the above embodiments has been described for the case in which the amount of head movement was relatively large, but when the amount of head movement is relatively small (from one cylinder to three cylinders) it is not necessary to use frequency divided cylinder cross pulses, or odd cylinder cross pulses or even cylinder cross pulses, but use may be made of full cylinder cross pulses, as in the prior art, to achieve speed control.

Further, the above embodiments were explained with reference to the case in which a microprocessor is used as the basic head positioning control element, but in other embodiments the present invention is applicable where use is made of an equivalent microcomputer or specialized hardware circuit.

The above embodiments were explained with reference to head positioning control in a magnetic disk apparatus, but in other embodiments the present invention can also be applied to other memory devices requiring such positioning control, for example optical disk apparatuses and opto-magnetic disk apparatuses.

As mentioned above, in head positioning control circuitry embodying the present invention the load on a controlling microcomputer and on other control circuits can be lightened, so satisfactory head positioning control can be achieved when using an inexpensive and relatively low performance control circuit, even with higher speed head operation and higher density recording media.

### EXPLANATION OF REFERENCE SYMBOLS

- 1: Magnetic disk control unit
- 2: Magnetic disk drive control portion
- 4: Servo head
- 5: Position signal generation system
- 6: Speed control system
- 7: Position control system
- 9: Voice coil motor
- 21: Interface unit
- 22: Microprocessor unit (MPU)
- 23: Random access memory (RAM)
- 24: Read only memory (ROM)
- 25: Timer unit
- 26: Reference speed table ROM
- 27: DA converter
- 28: Output register
- 29: Input register
- 30: Bus
- 31: AD converter
- 51: Servo signal amplification circuit
- 52: Position signal generation circuit
- 52a: Position signal demodulation circuit
- 52b: Position detection circuit
- 53: Position information generation circuit
- 53a: Position signal slicer
- 53b: Position decoder
- 54: Track cross pulse generation circuit
- 55: Wave shaper circuit
- 56: Signal change circuit
- 57: Track cross pulse generation circuit
- 61: Speed signal generation circuit
- 62: Speed deviation calculation circuit
- 63: Differential circuit
- 71: Position deviation calculation circuit
- 81: Multiplexer
- 82: Power amplification circuit

## Claims

1. Head positioning control circuitry for a data storage device including a rotary disk and a head (4) moveable over the disk between different servo tracks recorded thereon for use in positioning the head in relation to the disk, which circuitry includes:
position signal generation means (5) having a position information generation circuit (53) that is operable to derive position information (SNI,SNN,SQI,SQN) from signals produced in the head when it crosses such tracks, which information is dependent upon the current track position of the head relative to the disk, and having track cross pulse generation means (54,55) for deriving from that information respective track cross pulses (PODD/PEVEN) indicative of movement of the head across individual servo tracks; and
speed control means (6), having a control circuit (22) connected to the said position signal generation means (5) for receiving therefrom and operating in dependence upon such track cross pulses (PODD/PEVEN), operable to perform a speed-controlled track seek operation for causing the said head to be moved, from its track position at the start of the operation to a selected target track position, in dependence upon a stored measure (DIFF) dependent upon the difference between the said selected target track position and the current track position of the head;
characterised in that the said control circuit (22) is such that:
at the start of the said track seek operation, if the target track position is an odd track position the said track cross pulse generation means (54,55) are conditioned to produce track cross pulses (PODD), during the track seek operation, only when odd tracks on the disk are crossed by the head (4), but if the target track position is an even track position the said track cross pulse generation means (54,55) are conditioned to produce track cross pulses (PEVEN), during the track seek operation, only when even tracks on the disk are crossed by the head (4);
when the first track cross pulse (PODD/PEVEN) is produced during the track seek operation the said stored measure (DIFF) is reduced in magnitude by 1 or 2 in order that, if the magnitude of said measure is initially odd, it becomes even; and
whenever a track cross pulse (PODD/PEVEN) is produced subsequently during that operation the magnitude of the said stored measure (DIFF) is reduced by 2.

2. Head positioning control circuitry as claimed in claim 1, wherein the said control circuit (22) includes a microprocessor unit which operates in dependence upon the said track cross pulses (PODD/PEVEN).

3. Head positioning control circuitry as claimed in claim 1 or 2, wherein the said track cross pulse generation means (54, 55) includes a first gate circuit (546) operable to produce the even track cross pulses (PEVEN) in dependence upon first position information (SNI,SNN) derived by the said position signal generation means (5), a second gate circuit (547) operable to produce the odd track cross pulses (PODD) in dependence upon second position information (SQI,SQN) derived by the said position signal generation means (5), an even pulse latch circuit (283) which can be set selectively by the said control circuit in order to cause the even track cross pulses produced by the first gate circuit to be applied to the said control circuit during the said track seek operation, and an odd pulse latch circuit (282) which can be set selectively by the said control circuit in order to cause the odd track cross pulses produced by the second gate circuit to be applied to the control circuit during the track seek operation.

4. Head positioning control circuitry as claimed in claim 3, wherein:
the said position signal generation means (5) includes a position signal generation circuit (52) operable to generate orthogonal two-phase servo signals (POSN,POSQ) in dependence upon the said signals produced in the head as it crosses the said servo tracks, the said position signal generation circuit (53) being operable to generate four types of position information (SNN,SNI,SQN,SQI) in dependence upon the said two-phase servo signals;
the said first gate circuit (546) of the said track cross pulse generation means is operable to generate the said even track cross pulses in dependence upon two of the said types of position information (SNN, SNI), which two types correspond to one orthogonal phase; and
the said second gate circuit (547) of the said track cross pulse generation means is operable to generate the said odd track cross pulses in dependence upon the other two types of position information (SQN, SQI) which correspond to the other orthogonal phase.

5. Head positioning control circuitry as claimed in claim 1 or 2, wherein the said track cross pulse generation means (54', 55', 57, 58) includes:
a D-type flipflop (571), and an AND gate circuit (572), connected for receiving from the said position signal generation means (5) full-frequency track cross pulses (TRXP₀') produced thereby as the head crosses each individual servo track during the track seek operation, and operable in response to alternate ones of those full-frequency track cross pulses received during the operation to produce half-frequency track cross pulses (TRXP(EVEN)/TRXP(ODD));
an even pulse latch circuit (283) having an output (EVEN) connected to a preset terminal (PRST) of the said D-type flipflop and operable in dependence upon the control circuit to apply a pulse to that terminal at the start of the said track seek operation so that during that operation the said track cross pulse generation means (54', 55', 57, 58) produces the said half-frequency track cross pulses in response to the second and each alternate successive full-frequency track cross pulse produced by the position generation means (5); and
an odd pulse latch circuit (282) having an output connected to a clear input (CLR) of the said D-type flipflop and operable in dependence upon the control circuit (22) to apply a pulse to that terminal at the start of the said track seek operation so that during that operation the said track cross pulse generation means produces the said half-frequency track cross pulse in response to the first and each alternate successive full-frequency track cross pulse produced by the position signal generation means (5).

6. Head positioning control circuitry as claimed in claim 5, wherein:
the said position signal generating means (5) includes a position signal generation circuit (52) operable to generate orthogonal two-phase servo signals (POSN, POSQ) in dependence upon the said signals produced in the head as it crosses the said servo tracks, the said position information generation circuit (53) being operable to generate four types of position information (SNN, SNI, SQN, SQI) in dependence upon the said two-phase servo signals, and also includes a track cross pulse generation circuit (54') operable to produce the said full-frequency track cross pulses (TRXPo') in dependence upon the said four types of position information; and
the said full-frequency track cross pulses (TRXPo') produced by the said track cross pulse generation circuit (54') are applied to the clock terminal (CLK) of the said D-type flipflop (571) and to one input terminal of the said AND gate circuit (572), one of the outputs (Q̅) of the D-type flipflop (571) being connected to the D input terminal thereof, and the other output (Q) of the said D-type flipflop being connected to the other input terminal of the said AND gate circuit.

7. Head positioning control circuitry as claimed in any preceding claim, such that:
if the magnitude of the said difference (DIFF), between the said selected target track position and the said track position at the start of the track seek operation, exceeds a predetermined value then, during the said track seek operation, the said control circuit (22) receives as input and operates in dependence upon either the odd track cross pulses or upon the even track cross pulses produced by the said track cross pulse generation means (54,55; 54',55',57, 58);
whereas if the magnitude of that difference (DIFF) does not exceed the said predetermined value then, during the said track seek operation, the said control circuit receives as input and operates in dependence upon full-frequency track cross pulses (TRXP') produced by the said position signal generation means (5) when each individual track on the disk is crossed by the head (4).

8. A method of controlling the position of a head (4) of a data storage device, which head (4) is movable over a rotary disk included in the device between different servo tracks recorded on the disk for use in positioning the head in relation to the disk, the device having circuitry (54,55; 54',55',57,58) operable to derive from signals produced in the head when it crosses such tracks respective track cross pulses (PODD/PEVEN) which are employed by the device to monitor movement of the head across the said individual servo tracks during a speed-controlled track seek operation for causing the head to be moved, from its track position at the start of the operation to a selected target track position, in dependence upon a stored measure (DIFF) dependent upon the difference between the said selected target track position and the current track position of the head, which method comprises the steps of:
at the start of the said track seek operation, if the target track position is an odd track position, conditioning the said circuitry to produce track cross pulses (PODD), during the track seek operation, only when odd tracks on the disk are crossed by the head (4) but, if the target track position is an even track position, conditioning the said circuitry to produce track cross pulses (PEVEN), during the track seek operation, only when even tracks on the disk are crossed by the head (4);
commencing movement of the said head, at a predetermined reference speed, from its said track position at the start of the operation to the said selected target track position; and
during such movement of the head, when the first track cross pulse (PODD/PEVEN) is produced by the said circuitry reducing the said stored measure in magnitude by one or two in order that, if the magnitude of said measure is initially odd, it becomes even, and whenever a track cross pulse (PODD/PEVEN) is produced subsequently by the said circuitry during such movement, reducing the magnitude of the said stored measure (DIFF) by two.

## Patentansprüche

1. Kopfpositionierungssteuerschaltungsanordnung für eine Datenspeicheranordnung, die eine rotierende Platte und einen Kopf (4) enthält, der über die Platte zwischen verschiedenen Servospuren beweglich ist, die darauf zur Verwendung beim Positionieren des Kopfes bezüglich der Platte aufgezeichnet sind, welche Schaltungsanordnung enthält:
ein Positionssignalerzeugungsmittel (5) mit einer Positionsinformationserzeugungsschaltung (53), die betriebsfähig ist, um Positionsinformationen (SNI, SNN, SQI, SQN) aus Signalen abzuleiten, die in dem Kopf beim Überqueren solcher Spuren erzeugt wurden, welche Informationen von der gegenwärtigen Spurposition des Kopfes in bezug auf die Platte abhängig sind, und mit einem Spurüberquerungsimpulserzeugungsmittel (54, 55) zum Ableiten von entsprechenden Spurüberquerungsimpulsen (PODD/PEVEN), die eine Bewegung des Kopfes quer über individuelle Servospuren anzeigen, aus jenen Informationen; und
ein Geschwindigkeitssteuermittel (6), das eine Steuerschaltung (22) hat, die mit dem genannten Positionssignalerzeugungsmittel (5) verbunden ist, zum Empfangen von solchen Spurüberquerungsimpulsen (PODD/PEVEN) von ihm und zum Arbeiten in Abhängigkeit von ihnen, das betriebsfähig ist, um eine geschwindigkeitsgesteuerte Spursuchoperation auszuführen, zum Bewirken, daß sich der genannte Kopf von seiner Spurposition zu Beginn der Operation zu einer ausgewählten Zielspurposition bewegt, in Abhängigkeit von einem gespeicherten Maß (DIFF), das von der Differenz zwischen der genannten ausgewählten Zielspurposition und der gegenwärtigen Spurposition des Kopfes abhängt;
dadurch gekennzeichnet, daß die genannte Steuerschaltung (22) so ist, daß:
zu Beginn der genannten Spursuchoperation, falls die Zielspurposition eine ungerade Spurposition ist, das genannte Spurüberquerungsimpulserzeugungsmittel (54, 55) konditioniert wird, während der Spursuchoperation Spurüberquerungsimpulse (PODD) nur zu erzeugen, wenn ungerade Spuren auf der Platte durch den Kopf (4) überquert werden, falls aber die Zielspurposition eine gerade Spurposition ist, das genannte Spurüberquerungsimpulserzeugungsmittel (54, 55) konditioniert wird, während der Spursuchoperation Spurüberquerungsimpulse (PEVEN) nur zu erzeugen, wenn gerade Spuren auf der Platte durch den Kopf (4) überquert werden;
wenn der erste Spurüberquerungsimpuls (PODD/PEVEN) während der Spursuchoperation erzeugt ist, das genannte gespeicherte Maß (DIFF) in der Größe um 1 oder 2 reduziert wird, damit es, falls die Größe des genannten Maßes anfangs ungerade ist, gerade wird; und
immer wenn ein Spurüberquerungsimpuls (PODD/PEVEN) während jener Operation anschließend erzeugt ist, die Größe des genannten gespeicherten Maßes (DIFF) um 2 reduziert wird.

2. Kopfpositionierungssteuerschaltungsanordnung nach Anspruch 1, bei der die genannte Steuerschaltung (22) eine Mikroprozessoreinheit enthält, die in Abhängigkeit von den genannten Spurüberquerungsimpulsen (PODD/PEVEN) arbeitet.

3. Kopfpositionierungssteuerschaltungsanordnung nach Anspruch 1 oder 2, bei der das genannte Spurüberquerungsimpulserzeugungsmittel (54, 55) eine erste Gatterschaltung (546) enthält, die betriebsfähig ist, um die geraden Spurüberquerungsimpulse (PEVEN) in Abhängigkeit von ersten Positionsinformationen (SNI, SNN) zu erzeugen, die durch das genannte Positionssignalerzeugungsmittel (5) abgeleitet wurden, eine zweite Gatterschaltung (547), die betriebsfähig ist, um die ungeraden Spurüberquerungsimpulse (PODD) in Abhängigkeit von zweiten Positionsinformationen (SQI, SQN) zu erzeugen, die durch das genannte Positionssignalerzeugungsmittel (5) abgeleitet wurden, eine Verriegelungsschaltung für gerade Impulse (283), die durch die genannte Steuerschaltung selektiv gesetzt werden kann, um zu bewirken, daß die geraden Spurüberquerungsimpulse, die durch die erste Gatterschaltung erzeugt wurden, der genannten Steuerschaltung während der genannten Spursuchoperation zugeführt werden, und eine Verriegelungsschaltung für ungerade Impulse (282), die durch die genannte Steuerschaltung selektiv gesetzt werden kann, um zu bewirken, daß die ungeraden Spurüberquerungsimpulse, die durch die zweite Gatterschaltung erzeugt wurden, der Steuerschaltung während der Spursuchoperation zugeführt werden.

4. Kopfpositionierungssteuerschaltungsanordnung nach Anspruch 3, bei der:
das genannte Positionssignalerzeugungsmittel (5) eine Positionssignalerzeugungsschaltung (52) enthält, die betriebsfähig ist, um orthogonale Zweiphasen-Servosignale (POSN, POSQ) in Abhängigkeit von den genannten Signalen zu erzeugen, die in dem Kopf beim Überqueren der genannten Servospuren erzeugt wurden, wobei die genannte Positionssignalerzeugungsschaltung (53) betriebsfähig ist, um vier Typen von Positionsinformationen (SNN, SNI, SQN, SQI) in Abhängigkeit von den genannten Zweiphasen-Servosignalen zu erzeugen;
die genannte erste Gatterschaltung (546) des genannten Spurüberquerungsimpulserzeugungsmittels betriebsfähig ist, um die genannten geraden Spurüberquerungsimpulse in Abhängigkeit von zwei der genannten Typen von Positionsinformationen (SNN, SNI) zu erzeugen, welche zwei Typen einer orthogonalen Phase entsprechen; und
die genannte zweite Gatterschaltung (547) des genannten Spurüberquerungsimpulserzeugungsmittels betriebsfähig ist, um die genannten ungeraden Spurüberquerungsimpulse in Abhängigkeit von den anderen zwei Typen von Positionsinformationen (SQN, SQI) zu erzeugen, die der anderen orthogonalen Phase entsprechen.

5. Kopfpositionierungssteuerschaltungsanordnung nach Anspruch 1 oder 2, bei der das genannte Spurüberquerungsimpulserzeugungsmittel (54', 55', 57, 58) enthält:
ein D-Typ-Flipflop (571) und eine UND-Gatterschaltung (572), verbunden zum Empfangen von Vollfrequenz-Spurüberquerungsimpulsen (TRXP₀') von dem genannten Positionssignalerzeugungsmittel (5), die dadurch erzeugt werden, wenn der Kopf jede individuelle Servospur während der Spursuchoperation überquert, und betriebsfähig ansprechend auf abwechselnde jener Vollfrequenz-Spurüberquerungsimpulse, die während der Operation empfangen werden, um Halbfrequenz-Spurüberquerungsimpulse (TRXP(EVEN)/TRXP(ODD)) zu erzeugen;
eine Verriegelungsschaltung für gerade Impulse (283), die einen Ausgang (EVEN) hat, der mit einem Voreinstellanschluß (PRST) des genannten D-Typ-Flipflops verbunden ist, und in Abhängigkeit von der Steuerschaltung betriebsfähig ist, um jenem Anschluß zu Beginn der genannten Spursuchoperation einen Impuls zuzuführen, so daß das genannte Spurüberquerungsimpulserzeugungsmittel (54', 55', 57, 58) während jener Operation die genannten Halbfrequenz-Spurüberquerungsimpulse als Reaktion auf den zweiten und jeden abwechselnden aufeinanderfolgenden Vollfrequenz-Spurüberquerungsimpuls erzeugt, der durch das Positionssignalerzeugungsmittel (5) erzeugt wurde; und
eine Verriegelungsschaltung für ungerade Impulse (282), die einen Ausgang hat, der mit einem Löscheingang (CLR) des genannten D-Typ-Flipflops verbunden ist, und in Abhängigkeit von der Steuerschaltung (22) betriebsfähig ist, um jenem Anschluß zu Beginn der genannten Spursuchoperation einen Impuls zuzuführen, so daß das genannte Spurüberquerungsimpulserzeugungsmittel während jener Operation den genannten Halbfrequenz-Spurüberquerungsimpuls als Reaktion auf den ersten und jeden abwechselnden aufeinanderfolgenden Vollfrequenz-Spurüberquerungsimpuls erzeugt, der durch das Positionssignalerzeugungsmittel (5) erzeugt wurde.

6. Kopfpositionierungssteuerschaltungsanordnung nach Anspruch 5, bei der:
das genannte Positionssignalerzeugungsmittel (5) eine Positionssignalerzeugungsschaltung (52) enthält, die betriebsfähig ist, um orthogonale Zweiphasen-Servosignale (POSN, POSQ) in Abhängigkeit von den genannten Signalen zu erzeugen, die in dem Kopf beim Überqueren der genannten Servospuren erzeugt wurden, wobei die genannte Positionsinformationserzeugungsschaltung (53) betriebsfähig ist, um vier Typen von Positionsinformationen (SNN, SNI, SQN, SQI) in Abhängigkeit von den genannten Zweiphasen-Servosignalen zu erzeugen, und auch eine Spurüberquerungsimpulserzeugungsschaltung (54') enthält, die betriebsfähig ist, um die genannten Vollfrequenz-Spurüberquerungsimpulse (TRXP₀')in Abhängigkeit von den genannten vier Typen von Positionsinformationen zu erzeugen; und
die genannten Vollfrequenz-Spurüberquerungsimpulse (TRXP₀'), die durch die genannte Spurüberquerungsimpulserzeugungsschaltung (54') erzeugt wurden, dem Taktanschluß (CLK) des genannten D-Typ-Flipflops (571) und einem Eingangsanschluß der genannten UND-Gatterschaltung (572) zugeführt werden, wobei einer der Ausgänge ( Q̅ ) des D-Typ-Flipflops (571) mit seinem D-Eingangsanschluß verbunden ist, und der andere Ausgang (Q) des genannten D-Typ-Flipflops mit dem anderen Eingangsanschluß der genannten UND-Gatterschaltung verbunden ist.

7. Kopfpositionierungssteuerschaltungsanordnung nach einem der vorhergehenden Ansprüche derart, daß:
die genannte Steuerschaltung (22), falls die Größe der genannten Differenz (DIFF) zwischen der genannten ausgewählten Zielspurposition und der genannten Spurposition zu Beginn der Spursuchoperation einen vorbestimmten Wert überschreitet, während der genannten Spursuchoperation dann entweder die ungeraden Spurüberquerungsimpulse oder die geraden Spurüberquerungsimpulse, die durch das genannte Spurüberquerungsimpulserzeugungsmittel (54, 55; 54', 55', 57, 58) erzeugt wurden, als Eingabe empfängt und in Abhängigkeit von ihnen arbeitet;
wogegen die genannte Steuerschaltung, falls die Größe jener Differenz (DIFF) den genannten vorbestimmten Wert nicht überschreitet, während der genannten Spursuchoperation dann Vollfrequenz-Spurüberquerungsimpulse (TRXP'), die durch das genannte Positionssignalerzeugungsmittel (5) beim Überqueren jeder individuellen Spur auf der Platte durch den Kopf (4) erzeugt wurden, als Eingabe empfängt und in Abhängigkeit von ihnen arbeitet.

8. Ein Verfahren zum Steuern der Position eines Kopfes (4) einer Datenspeicheranordnung, welcher Kopf über eine rotierende Platte, die in der Anordnung enthalten ist, zwischen verschiedenen Servospuren beweglich ist, die auf der Platte zur Verwendung beim Positionieren des Kopfes in bezug auf die Platte aufgezeichnet sind, wobei die Anordnung eine Schaltungsanordnung (54, 55; 54', 55', 57, 58) hat, die betriebsfähig ist, um von Signalen, die in dem Kopf beim Überqueren solcher Spuren erzeugt wurden, entsprechende Spurüberquerungsimpulse (PODD/PEVEN) abzuleiten, die durch die Anordnung verwendet werden, um eine Bewegung des Kopfes quer über die genannten individuellen Servospuren während einer geschwindigkeitsgesteuerten Spursuchoperation zu überwachen, zum Bewirken, daß sich der Kopf von seiner Spurposition zu Beginn der Operation zu einer ausgewählten Zielspuroperation bewegt, in Abhängigkeit von einem gespeicherten Maß (DIFF), das von der Differenz zwischen der genannten ausgewählten Zielspurposition und der gegenwärtigen Spurposition des Kopfes abhängt, welches Verfahren die Schritte umfaßt:
zu Beginn der genannten Spursuchoperation, falls die Zielspurposition eine ungerade Spurposition ist, Konditionieren der genannten Schaltungsanordnung, um während der Spursuchoperation Spurüberquerungsimpulse (PODD) nur zu erzeugen, wenn ungerade Spuren auf der Platte durch den Kopf (4) überquert werden, falls aber die Zielspurposition eine gerade Spurposition ist, Konditionieren der genannten Schaltungsanordnung, um während der Spursuchoperation Spurüberquerungsimpulse (PEVEN) nur zu erzeugen, wenn gerade Spuren auf der Platte durch den Kopf (4) überquert werden;
Beginnen einer Bewegung des genannten Kopfes mit einer vorbestimmten Bezugsgeschwindigkeit von seiner genannten Spurposition zu Beginn der Operation zu der genannten ausgewählten Zielspurposition; und
während solch einer Bewegung des Kopfes, wenn der erste Spurüberquerungsimpuls (PODD/PEVEN) durch die genannte Schaltungsanordnung erzeugt ist, Reduzieren des genannten gespeicherten Maßes in der Größe um eins oder zwei, damit es, falls die Größe des genannten Maßes anfangs ungerade ist, gerade wird, und immer wenn ein Spurüberquerungsimpuls (PODD/PEVEN) anschließend durch die genannte Schaltungsanordnung während solch einer Bewegung erzeugt ist, Reduzieren der Größe des genannten gespeicherten Maßes (DIFF) um zwei.

## Revendications

1. Circuit de contrôle de positionnement de tête pour un dispositif de stockage de données incluant un disque tournant et une tête (4) mobile sur le disque entre différentes pistes d'asservissement enregistrées dessus en vue d'une utilisation lors du positionnement de la tête par rapport au disque, lequel circuit inclut :
un moyen de génération de signal de position (5) comportant un circuit de génération d'information de position (53) qui peut être actionné pour dériver une information de position (SNI, SNN, SQI, SQN) à partir de signaux produits dans la tête lorsqu'elle croise ces pistes, laquelle information dépend de la position de piste courante de la tête par rapport au disque et comportant un moyen de génération d'impulsions de croisement de piste (54, 55) pour dériver à partir de cette information des impulsions de croisement de piste respectives (PIMPAIR/PPAIR) indicatives du déplacement de la tête au travers de pistes d'asservissement individuelles ; et
un moyen de commande de vitesse (6) comportant un circuit de commande (22) connecté audit moyen de génération de signal de position (5) pour en recevoir des impulsions de croisement de piste (PIMPAIR/PPAIR) et pour opérer en fonction de celles-ci, lequel moyen peut être activé pour réaliser une opération de recherche de piste à vitesse commandée pour provoquer le déplacement de ladite tête depuis sa position de piste au début de l'opération jusqu'à une position de piste cible sélectionnée, en fonction d'une mesure stockée (DIFF) qui dépend de la différence entre ladite position de piste cible sélectionnée et la position de piste courante de la tête,
caractérisé en ce que ledit circuit de commande (22) est tel que :
au début de ladite opération de recherche de piste, si la position de piste cible est une position de piste impaire, ledit moyen de génération d'impulsions de croisement de piste (54, 55) est conditionné pour produire des impulsions de croisement de piste (PIMPAIR) pendant l'opération de recherche de piste, seulement lorsque des pistes impaires situées sur le disque sont croisées par la tête (4) mais si la position de piste cible est une position de piste paire, ledit moyen de génération d'impulsions de croisement de piste (54, 55) est conditionné pour produire des impulsions de croisement de piste (PPAIR) pendant l'opération de recherche seulement lorsque des pistes paires situées sur le disque sont croisées par la tête (4) ;
lorsque la première impulsion de croisement de pistes (PIMPAIR/PPAIR) est produite pendant l'opération de recherche de piste, ladite mesure stockée (DIFF) voit son amplitude réduite de un ou de deux afin que si l'amplitude de ladite mesure est initialement impaire, elle devienne paire ;
chaque fois qu'une impulsion de croisement de piste (PIMPAIR/PPAIR) est produite ensuite pendant cette opération, l'amplitude de ladite mesure stockée (DIFF) est réduite de deux.

2. Circuit de contrôle de positionnement de tête selon la revendication 1, dans lequel ledit circuit de contrôle (22) inclut une unité de microprocesseur qui opère en fonction desdites impulsions de croisement de piste (PIMPAIR/PPAIR).

3. Circuit de contrôle de positionnement de tête selon la revendication 1 ou 2, dans lequel ledit moyen de génération d'impulsions de croisement de piste (54, 55) inclut un premier circuit de porte (546) qui peut fonctionner pour produire les impulsions de croisement de piste paires (PPAIR) en fonction d'une première information de position (SNI, SNN) dérivée par ledit moyen de génération de signal de position (5), un second circuit de porte (547) qui fonctionne pour produire les impulsions de croisement de piste impaires (PIMPAIR) en fonction d'une seconde information de position (SQI, SQN) dérivée par ledit moyen de génération de signal de position (5), un circuit de verrouillage d'impulsion paire (283) qui peut être établi sélectivement par ledit circuit de contrôle afin de provoquer l'application des impulsions de croisement de piste produites par le premier circuit de porte audit circuit de contrôle pendant ladite opération de recherche de piste et un circuit de verrouillage d'impulsion impaire (282) qui peut être établi sélectivement par ledit circuit de contrôle afin de provoquer l'application des impulsions de croisement de piste impaires produites par le second circuit de porte au circuit de contrôle pendant l'opération de recherche de piste.

4. Circuit de contrôle de positionnement de tête selon la revendication 3, dans lequel :
ledit moyen de génération de signal de position (5) inclut un circuit de génération de signal de position (52) qui fonctionne pour générer des signaux d'asservissement à deux phases orthogonales (POSN, POSQ) en fonction desdits signaux produits dans la tête lorsqu'elle croise lesdites pistes d'asservissement, ledit circuit de génération de signal de position (53) pouvant être actionné pour générer quatre types d'information de position (SNN, SNI, SQN, SQI) en fonction desdits signaux d'asservissement à deux phases ;
ledit premier circuit de porte (546) duit moyen de génération d'impulsions de croisement de piste peut fonctionner pour générer lesdites impulsions de croisement de piste paires en fonction de deux desdits types d'information de position (SNN, SNI), lesquels deux types correspondent à l'une des phases orthogonales ; et
ledit second circuit de porte (547) duit moyen de génération d'impulsions de croisement de piste peut fonctionner pour générer lesdites impulsions de croisement de piste impaires en fonction des autres deux types d'information de position (SQN, SQI) qui correspondent à l'autre phase orthogonale.

5. Circuit de contrôle de positionnement de tête selon la revendication 1 ou 2, dans lequel ledit moyen de génération d'impulsions de croisement de piste (54', 55', 57, 58) inclut :
une bascule de type D (571) et un circuit de porte ET (572) connectés pour recevoir depuis ledit moyen de génération de signal de position (5) des impulsions de croisement de piste pleine fréquence (TRXPo') produites ainsi lorsque la tête croise chaque piste d'asservissement individuelle pendant l'opération de recherche de piste, et qui peuvent fonctionner en réponse à certaines alternées de ces impulsions de croisement de piste pleine fréquence reçues pendant l'opération pour produire des impulsions de croisement de piste demi-fréquence (TRXP(PAIR)/TRXP(IMPAIR)) :
un circuit de verrouillage d'impulsion paire (283) comportant une sortie (PAIR) connectée à une borne préétablie (PRST) de ladite bascule de type D et pouvant fonctionner en fonction du circuit de commande pour appliquer une impulsion à cette borne au début de ladite opération de recherche de piste de telle sorte que pendant cette opération ledit moyen de génération d'impulsions de croisement de piste (54', 55', 57, 58) produise lesdites impulsions de croisement de piste demi-fréquence en réponse à la seconde impulsion de croisement de piste pleine fréquence et à chaque impulsion de croisement de piste pleine fréquence successive alternée produite par le moyen de génération de signal de position (5) ; et
un circuit de verrouillage d'impulsion impaire (282) comportant une sortie connectée à une entrée de remise à zéro (CLR) de ladite bascule de type D et pouvant fonctionner en fonction du circuit de contrôle (22) pour appliquer une impulsion à cette borne au début de ladite opération de recherche de piste de telle sorte que pendant cette opération ledit moyen de génération d'impulsions de croisement de piste produise ladite impulsion de croisement de piste demi-fréquence en réponse à la première impulsion de croisement de piste pleine fréquence et à chaque impulsion de croisement de piste pleine fréquence successive alternée produite par le moyen de génération de signal de position (5).

6. Circuit de contrôle de positionnement de tête selon la revendication 5, dans lequel :
ledit moyen de génération de signal de position (5) inclut un circuit de génération de signal de position (52) qui peut fonctionner pour générer des signaux d'asservissement à deux phases (POSN, POSQ) en fonction desdits signaux produits dans la tête lorsqu'elle croise lesdites pistes d'asservissement, ledit circuit de génération d'information de position (53) pouvant être actionné pour générer quatre types d'information de position (SNN, SNI, SQN, SQI) en fonction desdits signaux d'asservissement à deux phases, et il inclut également un circuit de génération d'impulsions de croisement de piste (54') qui peut fonctionner pour produire lesdites impulsions de croisement de piste pleine fréquence (TRXPo') en fonction desdits quatre types d'information de position ; et
lesdites impulsions de croisement de piste pleine fréquence (TRXPo') produites par ledit circuit de génération d'impulsions de croisement de piste (54') sont appliquées à la borne d'horloge (CLK) de ladite bascule de type D (571) et à une borne d'entrée duit circuit de porte ET (572), l'une des sorties ( 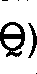 ) de la bascule de type D (571) étant connectée à sa borne d'entrée D et l'autre sortie (Q) de ladite bascule de type D étant connectée à l'autre borne d'entrée duit circuit de porte ET.

7. Circuit de contrôle de positionnement de tête selon l'une quelconque des revendications précédentes, lequel circuit est tel que :
si l'amplitude de ladite différence (DIFF) entre ladite position de piste cible sélectionnée et ladite position de piste au début de l'opération de recherche de piste excède une valeur prédéterminée, alors pendant ladite opération de recherche ce piste, ledit circuit de contrôle (22) reçoit en tant qu'entrée soit les impulsions de croisement de piste impaire soit les impulsions de croisement de piste paire produites par ledit moyen de génération d'impulsions de croisement de piste (54, 55 ; 54', 55', 57, 58) et fonctionne en fonction de celles-ci ;
tandis que si l'amplitude de cette différence (DIFF) n'excède pas ladite valeur prédéterminée, alors pendant ladite opération de recherche de piste, ledit circuit de commande reçoit en tant qu'entrée des impulsions de croisement de piste pleine fréquence (TRXP') produites par ledit moyen de génération de signal de position (5) lorsque chaque piste individuelle située sur le disque est croisée par la tête (4) et fonctionne en fonction de celles-ci.

8. Procédé de contrôle de positionnement de tête (4) d'un dispositif de stockage de données, laquelle tête (4) est mobile sur un disque tournant inclus dans le dispositif entre des pistes d'asservissement différentes enregistrées sur le disque en vue d'une utilisation lors du positionnement de la tête par rapport au disque, le dispositif comportant un circuit (54, 55 ; 54', 55', 57, 58) qui peut fonctionner pour dériver à partir de signaux produits dans la tête lorsqu'elle croise ces pistes des impulsions de croisement de piste respectives (PIMPAIR/PPAIR) qui sont utilisées par ledit dispositif pour surveiller un déplacement de la tête au travers desdites pistes d'asservissement individuelles pendant une opération de recherche de piste à vitesse commandée pour provoquer le déplacement de la tête de sa position de piste au début de l'opération jusqu'à une position de piste cible sélectionnée en fonction d'une mesure stockée (DIFF) qui dépend de la différence entre ladite position de piste cible sélectionnée et la position de piste courante de la tête, lequel procédé comprend les étapes de :
au début de ladite opération de recherche de piste, si la position de piste cible est une position de piste impaire, le conditionnement duit circuit pour produire des impulsions de croisement de piste (PIMPAIR) pendant l'opération de recherche de piste seulement lorsque des pistes impaires situées sur le disque sont croisées par la tête (4) mais si la position de piste cible est une position de piste paire, le conditionnement duit circuit pour produire des impulsions de croisement de piste (PPAIR) pendant l'opération de recherche de piste, seulement lorsque des pistes paires situées sur le disque sont croisées par la tête (4) ;
commencement du déplacement de ladite tête à une vitesse de référence prédéterminée depuis sa dite position de piste au début de l'opération jusqu'à ladite position de piste cible sélectionnée ; et
pendant ce déplacement de la tête, lorsque la première impulsion de croisement de piste (PIMPAIR/PPAIR) est produite par ledit circuit, la réduction de ladite mesure stockée du point de vue de son amplitude de un ou de deux afin que si l'amplitude de ladite mesure est initialement impaire, elle devienne paire et chaque fois qu'une impulsion de croisement de piste (PIMPAIR/PPAIR) est produite ensuite par ledit circuit pendant ce déplacement, la réduction de l'amplitude de ladite mesure stockée (DIFF) de deux.
